# EUROPÄISCHE PATENTSCHRIFT

(11) **EP 0 363 635 B1**
(45) Veröffentlichungstag und Bekanntmachung des Hinweises auf die Patenterteilung: **16.03.1994**
(21) Anmeldenummer: 89116398.2
(22) Anmeldetag: 06.09.1989
(51) Int. Cl.: C08J 3/20, C08J 3/24

(54) **Stabile, feinteilige, wässrige Einkomponenten-Silikonkatalysatoren, Verfahren zu deren Herstellung und deren Verwendung**
Stable, finely divided aqueous one-component silicone catalysts, process for their preparation and their use
Catalyseurs de silicones à composant unique sous forme stable, finement divisée, aqueuse, procédé pour leur préparation et utilisation

(30) Priorität: 03.10.1988 DE 3833572
(43) Veröffentlichungstag der Anmeldung: 18.04.1990
(73) Patentinhaber: Pfersee Chemie GmbH, 86460 Langweid a. Lech (DE)
(72) Erfinder: Chrobaczek, Harald, Dr., D-8900 Augsburg (DE); Lechlmair, Josef, D-8900 Augsburg (DE)

(56) Entgegenhaltungen:
- EP-A- 0 328 292
- BE-A- 645 661
- DATABASE WPI, abs.no.74-39040v, Derwent Publications Ltd, London, GB & JP-A-48092453

## Beschreibung

Die vorliegende Erfindung betrifft stabile, feinteilige, wäßrige Einkomponenten-Silikonkatalysatoren, ein einfaches Verfahren zu ihrer Herstellung und deren Verwendung zusammen mit üblichen Silikonemulsionen zur Veredlung von Fasermaterialien.

Es ist aus der DE-PS 1 444 551 bekannt, wasserlösliche, neutralisierte bis angesäuerte Umsetzungsprodukte aus aliphatischen oder aromatischen, Epoxidgruppen enthaltenden Verbindungen mit aliphatischen, cycloaliphatischen oder heterocyclischen Polyaminen zur Emulgierung von u.a. Diorganopolysiloxanen zu verwenden.
Es ist weiterhin bekannt, daß in derartige Dispersionen auch metallorganische Verbindungen eingearbeitet werden und die so erhaltenen Dispersionen als Härtungsmittel für insbesondere Organowasserstoffpolysiloxane Anwendung finden (siehe Rezeptdienst ® PHOBOTON BC unseres Hauses vom August 1982).

Nachteilig bei den bekannten Dispersionen ist dabei, daß dieselben nur in Gegenwart von größeren Mengen niedriger Alkohole mit 1 bis 3 C-Atomen hergestellt werden können, da nur dann die notwendige Stabilität und mechanische Belastbarkeit gegeben ist. Die Anwesenheit des Alkohols stellt jedoch für diese Produkte ein sicherheitstechnisches Risiko dar.

Es bestand daher die Aufgabe, diesen Alkohol zu eliminieren bzw. weitgehend zu eliminieren, ohne daß die vorteilhaften Eigenschaften der Dispersionen, insbesondere die Feinteiligkeit und damit Stabilität und die mechanische Belastbarkeit derselben in Mitleidenschaft gezogen werden.

Überraschenderweise konnte diese Aufgabe dadurch gelöst werden, daß die Herstellung der Silikondispersion getrennt in Gegenwart eines langkettigen, flüssigen Alkohols vorgenommen und anschließend mit der gesondert hergestellten Dispersion der metallorganischen Verbindung vereinigt wird.

Die vorliegende Erfindung beschreibt somit stabile, feinteilige, wäßrige Einkomponenten-Silikonkatalysatoren wie sie in den Ansprüchen 1 bis 5 näher erläutert werden. Auch ein Verfahren zur Herstellung dieser Katalysatoren wird beansprucht, ebenso wie die Verwendung derselben in Verbindung mit üblichen Silikondispersionen zur Veredlung von Fasermaterialien.

Die Herstellung der Silikondispersionen (Dispersion 1) ist aus der genannten DE-PS 1 444 551 grundsätzlich bekannt und der Fachmann wird keine Mühe haben, danach zu arbeiten, wobei heutzutage selbstverständlich in Abwesenheit chlorierter Kohlenwasserstoffe gearbeitet wird. Erfindungsgemäß wird nun - und das ist das entscheidende Kriterium des vorliegenden Gegenstandes - die Herstellung dieser Dispersionen in Gegenwart eines langkettigen, flüssigen Alkohols mit 6 bis 18 C-Atomen bzw. von Mischungen derartiger Alkohole vorgenommen. Als Beispiele für solche Alkohole kommen sowohl gesättigte wie auch ungesättigte, gerad- und auch verzweigtkettige Alkohole mit 8 bis 18 C-Atomen in Betracht, wobei insbesondere 2-Ethylhexanol, n-Octanol, Isotridecylalkohol und Oleylalkohol genannt seien. Gesättigte Alkohole mit 8 bis 13 C-Atomen sind besonders bevorzugt. Die Mengen an langkettigem, flüssigem Alkohol sind bei der Herstellung der Dispersion (1) so zu berechnen, daß in dem fertigen Einkomponenten-Silikonkatalysator 1 bis 1O, insbesondere 2 bis 8, besonders bevorzugt 2,5 bis 7 Gew.% derselben enthalten sind.

Durch die Mitverwendung dieser langkettigen, flüssigen Alkohole bei der Herstellung der Dispersion (1) wird es möglich, den für die Herstellung der als Emulgator verwendeten Epoxiaminvorpolymerisatlösung notwendigen niedrigen Alkohol mit 1 bis 3 C-Atomen nach der erfolgten Neutralisation weitgehend bis vollständig auszudestillieren, so daß von vornherein eine an niedrigen Alkoholen arme bzw. freie Dispersion (1) erhalten wird.

Die bei der Herstellung der Dispersion (1) verwendeten Silikone, vor allem Polydialkylsiloxane sind dem Fachmann geläufig und bedürfen keiner besonderen Erläuterung. Im allgemeinen werden aus wirtschaftlichen Gründen Polydimethylsiloxane unterschiedlicher Viskosität verwendet, doch sind auch - wenn auch weniger gut - α,ω-Dihydroxypolydialkyl- insbesondere -dimethylsiloxane für die Herstellung der Einkomponenten-Silikonkatalysatoren geeignet.

Die Dispersion (2), nämlich die Dispersion der metallorganischen Verbindung, wird in üblicher Weise unter Verwendung von nicht-ionogenen oder auch kationischen Emulgatoren hergestellt.

Die Herstellung gelingt dabei üblicherweise dadurch, daß eine Lösung des Emulgators im Wasser hergestellt wird und die metallorganische Verbindung bzw. eine Mischung an metallorganischen Verbindungen unter raschem Rühren eingebracht und dann durch Homogenisierung unter Druck und bei leicht erhöhter Temperatur die beständige Emulsion bereitet wird, wobei entweder vorher oder auch nachher durch Zugabe von Säuren, insbesondere Essigsäure, ein saurer pH-Wert eingestellt wird.
Die zur Herstellung der Dispersion (2) verwendeten metallorganischen Verbindungen sind bekannt. Im allgemeinen werden dazu Dialkylzinndicarboxylate, wie z.B. Dibutylzinndilaurat und/oder Dioctylzinndilaurat, Metallseifen, wie Zinkoctoat oder Zinkstearat, aber auch Titan- oder Zirkonsäureester, wie z.B. Stearyltitanat oder -zirkonat eingesetzt. Dem Fachmann sind aber auch andere metallorganische Verbindungen geläufig.

Die verwendeten Emulgatoren sind dem Fachmann ebenfalls bekannt. Ohne Anspruch auf Vollständigkeit sei darauf hingewiesen, daß als nicht-ionogene Emulgatoren Ethylenoxidumsetzungsprodukte von höheren Fettsäuren, Fettalkoholen, Fettsäureamiden und Fettsäureaminen in Frage kommen, wobei die letzteren auch in Form ihrer Salze mit niedrigen Carbonsäuren, wie Essig-, Ameisen- oder Glykolsäure, oder Mineralsäuren, wie Salzsäure oder Schwefelsäure herangezogen werden können. Als Beispiele für solche nichtionogenen Emulgatoren seien genannt:
Ethoxiliertes Kokosfettamin mit 5 bis 15 Ethylenoxid, ethoxiliertes Stearyl- oder Oleylamin mit 5 bis 3O Ethylenoxid bzw. die Acetate oder Chloride dieser Verbindungen, ethoxiliertes (N-Stearyl)- oder (N-Hexadecyl)-Trimethylendiamin mit 1O Ethylenoxid, ethoxiliertes Stearinsäureamid mit 12 Ethylenoxid, ethoxiliertes Ölsäuremonoethanolamid mit 4 Ethylenoxid, ethoxiliertes Cetyl-, Stearyl-, Isotridecyl- und Oleylalkohol mit durchschnittlich 1O bis 15 Ethylenoxid, 2, 6, 8-Trimethyl-4-Nonyloxipolyethylenethanol und Laurin-, Palmitin-, Stearin-, Behenund Rizinolsäure mit 1O bis 3O Ethylenoxid.
Wie die Beispiele zeigen, können die Kohlenwasserstoffreste gesättigt oder ungesättigt sein und weisen insbesondere 12 bis 2O C-Atome auf und sind mit durchschnittlich vorzugsweise 5 bis 15 Ethylenoxid ethoxiliert.

Als kationische Emulgatoren seien vor allem die quaternären Ammoniumverbindungen genannt. Beispiele für solche Verbindungen sind: Cetyl- oder Laurylbenzyldimethylammoniumchlorid, aber auch Polyoxiethylen (1O bis 15)-C₁₂ bis C₁₈-Alkylmethylammoniumchloride.

Zur Herstellung der fertigen Einkomponenten-Silikonkatalysatoren werden die getrennt hergestellten Dispersionen (1) und (2) miteinander vereinigt, und zwar in der Weise, daß auf 1 Teil Dispersion (2) 1 bis 5O, insbesondere 15 bis 35 Teile der Dispersion (1) zum Einsatz gelangen. Das Verhältnis ist einerseits abhängig von der Konzentration der Dispersionen (1) bzw. (2). Diese kann in weiten Grenzen variieren. So ist die Dispersion (1) im allgemeinen etwa 1O bis 45-gew.%ig an Polydialkylsiloxan und die Dispersion (2) enthält in der Regel 8 bis 3O Gew.% an metallorganischer Verbindung. Je nachdem ob nun höher oder niedriger konzentrierte Dispersionen (1) und/oder (2) angewandt werden, ist es erforderlich, das Verhältnis zu variieren. Andererseits ist das Verhältnis abhängig vom vorgesehenen Einsatz der Katalysatoren, so daß schlußendlich Einkomponenten-Silikonkatalysatoren erhalten werden, die etwa O,15 bis 10, insbesondere 0,4 bis 1,5 Gew.% metallorganische Verbindung enthalten.
Auf diese Weise werden Einkomponenten-Silikonkatalysatoren erhalten, die neben Wasser, üblichen Mitteln zur pH-Einstellung, Frostbeständigkeit und ähnlichen (Summe = 100 %) folgende Bestandteile enthalten: 5 bis 45 Gew.%, insbesondere 2O bis 4O Gew.% Silikon, vor allem Polydialkyl-, insbesondere Polydimethylsiloxane, wobei hierunter auch α,ω-Dihydroxipolydialkylsiloxane zu verstehen sind, 1 bis 1O Gew.%, insbesondere 2 bis 8 Gew.% langkettige, flüssige Alkohole mit 6 bis 18 C-Atomen, O,5 bis 16, insbesondere 3 bis 13 Gew.% Epoxiaminvorpolymerisat, O,O1 bis 3 Gew.%, insbesondere O,O1 bis O,5 Gew.% übliche nichtionogene bzw. kationische Emulgatoren, O,15 bis 10 Gew.%, insbesondere 0,4 bis 1,5 Gew.% metallorganische Verbindung und O bis 1,5 Gew.%, insbesondere unter O,8 Gew.% niedrige, einwertige Alkohole mit 1 bis 3 C-Atomen.

Die erfindungsgemäßen Einkomponenten-Silikonkatalysatoren zeichnen sich durch besondere mechanische Stabilität aus, insbesondere hervorzuheben ist die hervorragende Schüttelstabilität, was bedeutet, daß diese Dispersionen auch unter extremen Praxisbedingungen beständig bleiben. Der Grund für diese Beständigkeit ist die hervorragende Feinteiligkeit der emulgierten Bestandteile und es war überraschend, daß es durch die Mitverwendung des langkettigen, flüssigen Alkohols mit 6 bis 18 C-Atomen und die getrennte Emulgierung der Dispersionen (1) und (2) gelingt, trotz der zumindest weitgehenden Abwesenheit der niedrigen, einwertigen Alkohole stabile Silikonkatalysatoren zu bereiten. Vermutlich wird dieser Vorteil durch die getrennte Emulgierung und damit die getrennte Tröpfchenbildung zusätzlich gefördert. Der Vorteil der erfindungsgemäßen Katalysatoren liegt vor allem darin, daß dieselben keinen Flammpunkt mehr aufweisen bzw. deren Flammpunkt über 65°C liegt und daher eine einfachere Lagerhaltung ermöglichen, da das bisher durch den niedrigen Alkohol bedingte Sicherheitsrisiko überraschend ausgeschaltet werden konnte.

Die erhaltenen Einkomponenten-Silikonkatalysatoren werden ebenso wie die bekannten Formulierungen in Mengen von 5 bis 5O, insbesondere 1O bis 4O g/l (beim Foulardverfahren) als Härtungsmittel für insbesondere Polyorganowasserstoffsiloxane herangezogen, wobei es durchaus möglich ist, bei der Anwendung auch andere bekannte Textilhilfsmittel mitzuverwenden. Als Beispiele seien Knitterfreimittel, Appreturmittel und auch antistatische Mittel sowie die dazugehörigen Katalysatoren genannt, wobei eine besonders gute Wasserabweisung dann erhalten wird, wenn auch ein weiterer Katalysator für das H-Polysiloxan in geringen Mengen zusätzlich eingesetzt wird.

Die Herstellung der Ausrüstungsflotten gelingt in einfacher und bekannter Weise durch Zusammenmischen der Einkomponenten-Silikonkatalysatoren mit den üblichen Silikonemulsionen, insbesondere Polywasserstofforganosiloxanemulsionen und weiteren Textilveredlungsmitteln. Dabei können die erfindungsgemäßen Katalysatoren nach allen bekannten Ausrüstungsmethoden eingesetzt werden, wobei vor allem das Foulard- und das Ausziehverfahren zu nennen sind. Bei letzterem, das besonders für Wolle und Wollmischartikeln interessant ist, werden dabei die erfindungsgemäßen Katalysatoren im allgemeinen in Mengen von O,5 bis 5, insbesondere 1 bis 2,5 %, bezogen auf Warengewicht, angewandt. Die neuen Katalysatoren können aber in gleicher Weise wie bekannt, auch im Rahmen der Beschichtung eingesetzt werden.

Mit den vorliegenden Katalysatoren können in Verbindung mit den genannten weiteren Textilhilfsmitteln ebenso wie nach den bekannten Verfahren Fasermaterialien aller Art behandelt werden. Als Fasermaterialien sind dabei insbesondere Textilien zu nennen, wobei wiederum diejenigen Textilien besonders gut geeignet sind, die aus Cellulosefasern bestehen oder zumindest teilweise Cellulosefasern enthalten. Als zusätzliche Fasern neben der Cellulose kommen dabei sowohl synthetische Fasern, wie Polyester-, Polyamid- oder Polyacrylnitrilfasern, als auch Wolle in Betracht. Selbstverständlich kann aber die unter Verwendung der erfindungsgemäßen Katalysatoren durchgeführte Hydrophobierung auch zur Behandlung von reinen Synthesefaser- und Wollfasermaterialien herangezogen werden.

Die Erfindung wird nun anhand der nachfolgenden Beispiele näher erläutert, wobei Teile = Gewichtsteile und %-Angaben = Gewichtsprozent bedeuten.

### Beispiel 1

### Herstellung der Disperion (1)

420 g einer essigsauren Lösung eines Epoxiaminvorpolymerisates (siehen unten) werden mit 3O g Propylenglykol, 175 g Wasser und 15 g 6O %iger Essigsäure gemischt, danach werden 3O g Isotridecylalkohol und 25O g eines handelsüblichen Polydimethylsiloxans (Viskosität bei 2O°C 1OO mPa.s) einturbiniert und auf einer Hochdruckhomogenisiermaschine bei 3OO bar und 3O°C unter Rühren 45 Minuten homogenisiert.

Die oben erwähnte essigsaure Lösung des Epoxiaminvorpolymerisats wird dadurch hergestellt, daß 8O g eines Glycidylethers von 2,2-Bis(4-hydroxiphenyl)-propan (O,43 % Epoxigruppen) mit 31,5 g Hexamethylendiamin und 235,6 g Isopropylalkohol gemischt, auf 4O bis 5O°C während 45 Minuten unter Rühren und Rückflußkühlung erhitzt und anschließend durch Zugabe von 6O %iger Essigsäure (ca. 26 g) und 51O g Wasser die Reaktion abgestoppt und gleichzeitig auf einen pH-Wert von etwa 5 eingestellt wird. Anschließend wird unter vermindertem Druck bei 3O bis 4O°C ein Wasser/Alkohol-Gemisch abdestilliert, so daß das Endprodukt nur noch etwa 2 % Isopropylalkohol enthält und etwa 25%ig an Epoxiaminvorpolymerisat ist.

### Herstellung der Dispersion (2)

In die Lösung von 1O,5 g eines Isotridecylethoxilats (Isotridecylalkohol mit durchschnittlich 1O Ethylenoxid je Mol) und 7,9 g eines ethoxilierten Kokosmethylammoniumchlorids (durchschnittlich 12 Ethylenoxid je Mol) in 746,5 g Wasser, 46,3 g Propylenglykol und 3 g Essigsäure werden 185,8 g Dioctylzinndilaurat einturbiniert und auf einer Hochdruckhomogenisiermaschine bei 3OO bar und 35°C Minuten homogenisiert.

### Herstellung des Einkomponenten-Silikonkatalysators

Zur Herstellung des Einkomponenten-Silikonkatalysators werden die Disperion (1) und die Dispersion (2) im Verhältnis 24 : 1 miteinander gemischt (= Katalysator A).

Man erhält auf diese Weise ein Produkt, das gemessen mit dem Lange-Trübungsphotometer (Firma Dr. B. Lange GmbH, Berlin) eine Trübungszahl von 15 (in 1OOO-facher Verdünnung) und nach photonenkorrelations spektroskopischer Messung eine Teilchengröße von unter 25O nm aufweist.

### Katalysator B

Zum Vergleich wird in gleicher Weise, wie oben beschrieben, ein Katalysator B hergestellt, wobei aber die Dispersion (1) in Abwesenheit des Isotridecylalkohols mit entsprechend erhöhter Wassermenge bereitet wird (Trübungszahl 48).

### Katalysator C

Zum Vergleich wird wie oben unter Katalysator B beschrieben ein Katalysator C in der Weise bereitet, daß die Emulgierung der metallorganischen Verbindung zusammen mit dem Silikon, aber in Abwesenheit der genannten nicht-ionogenen Emulgatoren erfolgt (Trübungszahl 54).

### Katalysator D

Wie Katalysator C, aber mit 90 g Isopropanol und entsprechend reduzierter Wassermenge bei der Bereitung der Dispersion (1).

Zur Überprüfung der mechanischen Beständigkeit unter Praxisbedingungen werden Ausrüstungsflotten wie folgt hergestellt:
15 g/l der Katalysatoren A bis D
2O g/l einer handelsüblichen, nicht-ionogenen 4O%-igen Polymethylwasserstoffsiloxan-Dispersion (H-Siloxan mit Viskosität von 30 mPa.s bei 20°C)
2O g/l eines Cellulosevernetzers auf Glyoxalbasis (5O % Dimethyloldihydroxyethylenharnstoff verethert mit Methanol, ca. 5 % Neutralsalz) und 6 ml/l eines handelsüblichen Metallkatalysators (ca. 3O%ige wäßrige Zinkchloridlösung von pH ca. 1).

1OO ml dieser Flotten werden mechanisch durch Schütteln mit einer Frequenz von 18O Schwingungen pro Minute und einer Amplitude von 1O cm während 1 Stunde belastet und anschließend bei Raumtemperatur während 24 Stunden stehengelassen. Die visuelle Beurteilung der Flotten zeigt folgendes Bild:

| Flotte | Beurteilung | Flammpunkt |
|---|---|---|
| mit Katalysator A (erfindungsgemäß) | einwandfreier Ablauf der Ausrüstungsflotte an der Gefäßwandung ohne irgendeine Separation von Inhaltsstoffen | >65°C |
| mit Katalysator B (Vergleich) | ungleichmäßiger Ablauf der Ausrüstungsflotte an der Gefäßwandung mit deutlicher Separation (Öl) von Inhaltsstoffen | >65°C |
| mit Katalysator C (Vergleich) | ungleichmäßiger Ablauf der Ausrüstungsflotte an der Gefäßwandung mit deutlicher Separation (Öl) von Inhaltstoffen | >65°C |
| mit Katalysator D (Stand der Technik) | ähnlich wie mit Katalysator A | 35°C |

### Ausrüstungsbeispiel

Wird mit der unter Verwendung des Katalysators A hergestellten Ausrüstungsflotte ein Polyesterbaumwollmantelpopelin (67/33 mit ca. 300 g/m²) foulardiert (Flottenaufnahme ca. 65 %), dann bei 110°C 10 Minuten getrocknet und bei 150°C 5 Minuten kondensiert, so erhält man nach DIN 53 888 eine Wasseraufnahme von 10 % und einen sehr guten Abperleffekt (5/5/4).

### Beispiel 2

Die Herstellung des Einkomponenten-Silikonkatalysators A nach Beispiel 1 wird wiederholt, wobei aber zur Herstellung der Dispersion 15 g (A) bzw. 6O g (B) bzw. 9O g (C) Isotridecylalkohol verwendet werden.

Die Messung der Trübungszahl mit dem Lange-Trübungsphotometer ergibt für die so hergestellten Katalysatoren A, B und C die Werte 24 bzw. 17 bzw. 31 (gemessen in 1OOO-facher Verdünnung).

### Beispiel 3

Das Beispiel 1, Katalysator A, wird wiederholt unter Verwendung der gleichen Menge 2-Ethylhexanol (Katalysator A), n-Octanol (Katalysator B), Mischung Oleyl/Cetyl-Alkohol 1:1 (Katalysator C) und als Vergleich Myristylalkohol (Katalysator D) und die dabei erhaltenen Katalysatoren zeigen folgende Trübungszahl gemessen mit dem Lange-Trübungsphotometer in 1OOO-facher Verdünnung bzw. folgende Viskosität:

| Katalysator | | Trübungszahl | Viskosität bei 20°C in mPa.s |
|---|---|---|---|
| A) | erfindungsgemäß (Vergleich) | 12 | 52 |
| B) | | 11 | 100 |
| C) | | 18 | 135 |
| D) | | 79 | 640 |

Die Werte zeigen übereinstimmend die verbesserte Qualität der erfindungsgemäßen Katalysatoren.

### Beispiel 4

### Herstellung der Dispersion (1)

300 g einer schwach essigsauren Lösung eines Epoxiaminvorpolymerisates (siehe unten) werden mit 325 g Wasser und 15 g 60%iger Essigsäure gemischt, danach werden 45 g Isotridecylalkohol und 300 g eines handelsüblichen Polydimethylsiloxans (Viskosität bei 20°C 500 mPa.s) einturbiniert und dann auf einer Hochdruckhomogenisiermaschine bei 300 bar und 30°C unter Rühren 45 Minuten homogenisiert.

Die obenerwähnte essigsaure Lösung des Epoxiaminvorpolymerisats wird gemäß Beispiel 4, 2. Absatz der DE-PS 1 444 551 hergestellt, wobei aber abschließend das Methanol bei 30 bis 40°C unter Wasserstrahlvakuum abdestilliert wird, so daß eine etwa 25%ige Epoxiaminvorpolymerisatlösung erhalten wird, die nur etwa 1 % restliches Methanol enthält.

### Herstellung der Dispersion (2)

In 403 g Wasser werden 43 g 60%ige Essigsäure und 38 g Stearylaminethoxylat (10 Mol Ethylenoxid je Mol Stearylamin) eingerührt und dann werden 150 g Dibutylzinndilaurat zugegeben und unter Stickstoffatmosphäre auf einer Hochdruckhomogenisiermaschine bei 30°C während 45 Minuten homogenisiert. Abschließend werden noch 350 g Wasser von 60°C unter Rühren zulaufen gelassen.

### Herstellung des Einkomponenten-Silikonkatalysators

Zur Herstellung des Einkomponenten-Silikonkatalysators werden die Dispersion (1) und Dispersion (2) im Verhältnis 10 : 1 (A), 16 : 1 (B) und 40 : 1 (C) miteinander gemischt. Man erhält auf diese Weise feinteilige Katalysatoren mit hoher mechanischer Beständigkeit unter Anwendungsbedingungen.

Zur Behandlung eines Baumwollgewebes (ca. 180 g/m²) werden mit 15 g/l der oben beschriebenen Katalysatoren A bis C, 25 g/l einer handelsüblichen nicht-ionogenen 35%igen Polymethylwasserstoffsiloxan-Dispersion, 20 g/l eines handelsüblichen Cellulose-vernetzers (enthält mit Methanol verethertes Dimethyloldihydroxyethylenharnstoff und Pentamethylolmelamin im Verhältnis 12 : 1 und ca. 3 % Neutralsalz; Feststoffgehalt ca. 63 %) und 6 ml/l des im Beispiel 1 genannten Metallkatalysators eine Ausrüstungsflotte hergestellt, das Gewebe foulardiert (Flottenaufnahme ca. 63 %) dann bei 110°C ca. 8 Minuten getrocknet und bei 155°C 4 Minuten kondensiert.
Man erhält sehr gut wasserabweisende Materialien.

Das Beispiel kann ohne weiteres unter Verwendung einer Metallseife, z.B. Zink-2-Ethylhexoat, zur Herstellung der Dispersion (2) wiederholt werden. Dabei ist aber vorteilhaft in Gegenwart eines bekannten Lösungsvermittlers zu arbeiten.

### Beispiel 5

### Herstellung der Dispersion (1)

Die Herstellung der Dispersion (1) erfolgt in der Weise, wie unter Beispiel 1 beschrieben.

### Herstellung der Dispersion (2)

In 844 g Wasser werden 97 g Natriumstearat einturbiniert. Dann werden in die Mischung 33 g 65%ige wäßrige Zinkchloridlösung und anschließend 26 g eines Isotridecylethoxilates mit 10 Ethoxideinheiten gegeben. Die Vordispersion wird auf einer Hochdruckhomogenisiermaschine bei 300 bar und 30°C 45 Minuten emulgiert.

### Herstellung des Einkomponenten-Silikonkatalysators

Zur Herstellung des Einkomponenten-Silikonkatalysators werden die Dispersionen (1) und (2) im Verhältnis 3 : 1 miteinander gemischt.

Man erhält auch auf diese Weise einen feinteiligen Katalysator mit hoher mechanischer Beständigkeit unter Anwendungsbedingungen.

## Patentansprüche

1. Stabile, feinteilige, wäßrige Einkomponenten-Silikonkatalysatoren, erhalten durch Vereinigung
- einer an einwertigen Alkoholen mit 1 bis 3 C-Atomen freien bis nahezu freien Silikon-Dispersion, die in Gegenwart von langkettigen, flüssigen Alkoholen mit 6 bis 18 C-Atomen unter Verwendung von bekannten Epoxiaminvorpolymerisaten als Emulgatoren in üblicher Weise hergestellt worden ist (1) mit
- einer getrennt in üblicher Weise hergestellten, nichtionischen bzw. kationischen Dispersion von metallorganischen Verbindungen (2).

2. Katalysatoren nach Anspruch 1, dadurch gekennzeichnet, daß der Anteil an einwertigen Alkoholen mit 1 bis 3 C-Atomen 0 bis 1,5 Gew.%, bezogen auf den Einkomponenten-Silikonkatalysator, beträgt.

3. Katalysatoren nach den Ansprüchen 1 und 2, dadurch gekennzeichnet, daß der langkettige, flüssige Alkohol in Mengen von 1 bis 10, insbesondere 2 bis 8, besonders bevorzugt 2,5 bis 7 Gew.%, bezogen auf den Einkomponenten-Silikonkatalysator, enthalten ist.

4. Katalysatoren nach den Ansprüchen 1 bis 3, dadurch gekennzeichnet, daß als langkettige, flüssige Alkohole in der Dispersion (1) gesättigte bzw. ungesättigte, gerad- bzw. verzweigtkettige Alkohole mit 8 bis 18 C-Atomen, insbesondere 2-Ethylhexanol, n-Octanol, Isotridecylalkohol und Oleylalkohol bzw. Mischungen derselben, enthalten sind.

5. Katalysatoren nach den Ansprüchen 1 bis 4, dadurch gekennzeichnet, daß dieselben neben Wasser, üblichen Mitteln zur pH-Einstellung, Frostbeständigkeit u.ä. 5 bis 45 Gew.% Polydialkylsiloxan, insbesondere Polydimethylsiloxan,
1 bis 10 Gew.% langkettige, flüssige Alkohole mit 6 bis 18 C-Atomen,
0,5 bis 16 Gew.% Epoxiaminvorpolymerisat,
0,01 bis 3 Gew.% übliche, nichtionogene bzw. kationische Emulgatoren,
0,15 bis 10 Gew.% metallorganische Verbindungen und
0 bis 1,5 Gew.% einwertige Alkohole mit 1 bis 3 C-Atomen
enthalten.

6. Verfahren zur Herstellung der Einkomponenten-Silikonkatalysatoren nach den Ansprüchen 1 bis 5, dadurch gekennzeichnet, daß
- zuerst in Gegenwart eines langkettigen, flüssigen Alkohols mit 6 bis 18 C-Atomen eine an einwertigen Alkoholen mit 1 bis 3 C-Atomen freie bis nahezu freie Silikondispersion in bekannter Weise unter Verwendung von bekannten Epoxiaminvorpolymerisaten als Emulgator hergestellt wird (1) und
- diese Dispersion (1) mit einer getrennt in üblicher Weise hergestellten, nichtionischen bzw. kationischen Dispersion einer metallorganischen Verbindung (2) vereinigt wird.

7. Verfahren nach Anspruch 6, dadurch gekennzeichnet, daß der Anteil an einwertigem Alkohol mit 1 bis 3 C-Atomen bei der Herstellung der Dispersion (1) so gewählt wird, daß in dem fertigen Einkomponenten-Silikonkatalysator 0 bis 1,5 Gew.% des Alkohols enthalten sind.

8. Verfahren nach den Ansprüchen 6 und 7, dadurch gekennzeichnet, daß der Anteil an langkettigem, flüssigem Alkohol mit 6 bis 18 C-Atomen der Dispersion (1) so gewählt wird, daß in dem fertigen Einkomponenten-Silikonkatalysator 1 bis 10, insbesondere 2 bis 8, besonders bevorzugt 2,5 bis 7 Gew.% desselben enthalten sind.

9. Verfahren nach den Ansprüchen 6 bis 8, dadurch gekennzeichnet, daß als langkettige, flüssige Alkohole der Dispersion (1) gesättigte bzw. ungesättigte, gerad-bzw. verzweigtkettige Alkohole mit 8 bis 18 C-Atomen, insbesondere 2-Ethylhexanol, n-Octanol, Isotridecylalkohol und Oleylalkohol bzw. Mischungen derselben eingesetzt werden.

10. Verfahren nach den Ansprüchen 6 bis 9, dadurch gekennzeichnet, daß eine an Polydialkylsiloxan, insbesondere Polydimethylsiloxan 10 bis 45 Gew.%ige Dispersion (1) mit einer an metallorganischer Verbindung 8 bis 30 Gew.%igen Dispersion (2) im Gewichtsverhältnis 1 : 1 bis 50 : 1, insbesondere 15 : 1 bis 35 : 1 vereint wird.

11. Verwendung der Katalysatoren nach den Ansprüchen 1 bis 5 in Verbindung mit üblichen Silikonemulsionen, insbesondere Polyorganowasserstoffsiloxanen, zur Veredlung von Fasermaterialien.

## Claims

1. Stable, finely-divided, aqueous one-component silicone catalysts obtained by combining
- a silicone dispersion which is free to almost free of monohydric alcohols having 1 to 3 carbon atoms and which has been prepared in a conventional manner in the presence of long-chain liquid alcohols having 6 to 18 carbon atoms and with the use of known epoxyamine prepolymers as emulsifiers (1) with
- a nonionic or cationic dispersion of organo-metallic compounds (2) prepared separately in a conventional manner.

2. Catalysts according to Claim 1, characterized in that the content of monohydric alcohols having 1 to 3 carbon atoms is 0 to 1.5 % by weight, relative to the one-component silicone catalyst.

3. Catalysts according to Claims 1 and 2, characterized in that the long-chain liquid alcohol is present in amounts of 1 to 10, in particular 2 to 8, particularly preferably 2.5 to 7, % by weight, relative to the onecomponent silicone catalyst.

4. Catalysts according to Claims 1 to 3, characterized in that the long-chain liquid alcohols which are contained in dispersion (1) are saturated or unsaturated, straightchain or branched alcohols having 8 to 18 carbon atoms, in particular 2-ethylhexanol, n-octanol, isotridecyl alcohol and oleyl alcohol or mixtures thereof.

5. Catalysts according to Claims 1 to 4, characterized in that they contain, in addition to water, conventional agents for adjusting the pH, resistance to frost and the like, 5 to 45 % by weight of polydialkylsiloxane, in particular polydimethylsiloxane, 1 to 10 % by weight of long-chain liquid alcohols having 6 to 18 carbon atoms, 0.5 to 16 % by weight of epoxyamine prepolymer, 0.01 to 3 % by weight of conventional, nonionic or cationic emulsifiers, 0.15 to 10 % by weight of organometallic compounds and 0 to 1.5 % by weight of monohydric alcohols having 1 to 3 carbon atoms.

6. Process for the preparation of one-component silicone catalysts according to Claims 1 to 5, characterized in that
- first a silicone dispersion which is free to almost free of monohydric alcohols having 1 to 3 carbon atoms is prepared with the use of known epoxyamine prepolymers as emulsifier in a known manner in the presence of a long-chain liquid alcohol having 6 to 18 carbon atoms (1) and
- this dispersion (1) is combined with a nonionic or cationic dispersion of an organometallic compound (2) prepared separately in a conventional manner.

7. Process according to Claim 6, characterized in that the content of monohydric alcohol having 1 to 3 carbon atoms during the preparation of dispersion (1) is chosen such that 0 to 1.5 % by weight of the alcohol are contained in the ready-to-use one-component silicone catalyst.

8. Process according to Claims 6 and 7, characterized in that the content of long-chain, liquid alcohol having 6 to 18 carbon atoms of dispersion (1) is chosen such that 1 to 10, in particular 2 to 8, particularly preferably 2.5 to 7, % by weight thereof is contained in the ready-to-use one-component silicone catalyst.

9. Process according to Claims 6 to 8, characterized in that the long-chain, liquid alcohols of dispersion (1) used are saturated or unsaturated, straight-chain or branched alcohols having 8 to 18 carbon atoms, in particular 2-ethylhexanol, n-octanol, isotridecyl alcohol and oleyl alcohol or mixtures thereof.

10. Process according to Claims 6 to 9, characterized in that a dispersion (1) which contains 10 to 45 % by weight of polydialkylsiloxane, in particular polydimethylsiloxane, is combined with a dispersion (2) which contains 8 to 30 % by weight of organometallic compound in a weight ratio of 1:1 to 50:1, in particular 15:1 to 35:1.

11. Use of the catalysts according to Claims 1 to 5 in conjunction with conventional silicone emulsions, in particular polyorganohydridosiloxanes, for the finishing of fiber materials.

## Revendications

1. Catalyseurs pour silicones, à composant unique sous forme stable, finement divisée, aqueuse que l'on obtient en combinant:
- une dispersion de silicone dépourvue à quasi totalement dépourvue d'alcools monovalents (monoalcools) comportant 1 à 3 atomes de carbone, dispersion que l'on a préparé de façon usuelle en présence d'alcools liquides à longue chaîne comportant 6 à 18 atomes de carbone, avec utilisation de prépolymères connus de type époxyamine comme émulsifiant, (1) avec
- une dispersion, préparée séparément de façon usuelle, non ionique ou cationique, de composés organométalliques (2).

2. Catalyseurs selon la revendication 1, caractérisés en ce que la proportion d'alcools monovalents comportant 1 à 3 atomes de carbone représente 0 à 1,5 % en poids par rapport au catalyseur pour silicones.

3. Catalyseurs selon l'une des revendications 1 et 2, caracterisés en ce que l'alcool liquide à longue chaîne est contenu en des quantités de 1 à 10, notamment 2 à 8, de façon particulièrement préférée 2,5 à 7 % en poids, par rapport au catalyseur pour silicones.

4. Catalyseurs selon les revendications 1 à 3, caractérisés en ce que les alcools liquides à longue chaîne, contenus dans la disperion (1), sont des alcools saturés ou insaturés, linéaires ou ramifiés, comportant 8 à 18 atomes de carbone, notamment le 2-éthylhexanol, le n-octanol, l'alcool isotridécylique et l'alcool oléylique ou des mélanges de ces alcools.

5. Catalyseurs selon les revendications 1 à 4, caractérisés en ce qu'ils contiennent, en plus de l'eau, d'agents usuels, en outre pour ajuster le pH et pour assurer la stabilité à l'égard du froid,
5 à 45 % en poids de polydialkylsiloxane, notamment de polydiméthylsiloxane,
1 à 10 % en poids d'alcools liquides à longue chaîne comportant 6 à 18 atomes de carbone,
0,5 à 16 % en poids d'un prépolymère d'époxyamine,
0,01 à 3 % en poids d'émulsifiants usuels, non ionogènes ou cationiques,
0,15 à 10 % en poids de composés organo-métalliques et,
0 à 1,5 % en poids d'alcools monovalents comportant 1 à 3 atomes de carbone.

6. Procédé de préparation des catalyseurs pour silicones à composant unique, selon les revendications 1 à 5, caractérisé en ce que l'on prépare tout d'abord de façon connue en utilisant comme émulsifiant des prépolymères d'époxyamines connues, en présence d'un alcool liquide à longue chaîne ayant 6 à 18 atomes de carbone, une dispersion de silicone dépourvue à quasi dépourvue d'alcools monovalents comportant 1 à 3 atomes de carbone (1), et
- l'on combine cette dispersion (1) avec une dispersion non ionique ou cationique, d'un composé organo-métallique (2) préparée séparément de façon usuelle.

7. Procédé selon la revendication 6, caractérisé en ce qu'on choisit la proportion d'alcool monovalent comportant 1 à 3 atomes de carbone, lors de la préparation de la dispersion (1) de manière que le catalyseur pour silicones contienne, une fois terminé, 0 à 1,5 % en poids de cet alcool.

8. Procédé selon les revendications 6 et 7, caractérisé en ce que la proportion d'alcool liquide à longue chaîne comportant 6 à 18 atomes de carbone dans la dispersion (1) est choisie de façon que la catalyseur pour silicones contienne, à l'état terminé, 1 à 10, notamment 2 à 8 et de façon particulièrement préférée 2,5 à 7 % en poids de cet alcool liquide.

9. Procédé selon les revendications 6 à 8, caractérisé en ce qu'on utilise comme alcools liquides à longue chaîne de la dispersion (1) des alcools saturés ou insaturés, linéaires ou ramifiés ayant 8 à 18 atomes de carbone, notamment le 2-éthylhexanol, le n-octanol, l'alcool isotridécylique et l'alcool oléylique ou leurs mélanges.

10. Procédé selon les revendications 6 à 9, caractérisé en ce qu'on combine une dispersion (1) contenant 10 à 45 % en poids de polydialkylsiloxane, en particulier de polydiméthylsiloxane, et une dispersion (2) contenant 8 à 30 % en poids d'un composé organo-métallique, la combinaison étant effectuée selon un rapport pondéral de 1:1 à 50:1, en particulier de 15:1 à 35:1.

11. Utilisation des catalyseurs selon les revendications 1 à 5, en liaison avec des émulsions usuelles de silicone(s), en particulier des polyorganohydrogénosiloxanes, pour un traitement d'ennoblissement de matières fibreuses.
